# EUROPÄISCHE PATENTSCHRIFT

(11) **EP 4 294 686 B1**
(45) Veröffentlichungstag und Bekanntmachung des Hinweises auf die Patenterteilung: **28.01.2026**
(21) Anmeldenummer: 22709173.3
(22) Anmeldetag: 16.02.2022
(51) Int. Cl.: B60T 13/74, B60T 17/22

(54) **VERFAHREN ZUM BETRIEB EINES BREMSSYSTEMS EINES FAHRZEUGS**
METHOD FOR OPERATING A BRAKING SYSTEM OF A VEHICLE
PROCÉDÉ POUR FAIRE FONCTIONNER UN SYSTÈME DE FREINAGE D'UN VÉHICULE

(30) Priorität: 22.02.2021 DE 102021201641
(43) Veröffentlichungstag der Anmeldung: 27.12.2023
(73) Patentinhaber: AUMOVIO Germany GmbH, 60488 Frankfurt am Main (DE)
(72) Erfinder: BEUSS, Jochen, 60488 Frankfurt am Main (DE); STAUDER, Peter, 60488 Frankfurt am Main (DE); GRUBER, Steffen, 60488 Frankfurt am Main (DE); PLA, Sébastien, 60488 Frankfurt am Main (DE)
(74) Vertreter: Aumovio Corporation
(86) Internationale Anmeldenummer: PCT/DE2022/200020
(87) Internationale Veröffentlichungsnummer: WO 2022/174874

(56) Entgegenhaltungen:
- DE-A1- 10 012 448
- DE-A1- 10 106 374
- DE-A1- 102005 046 300
- DE-A1- 102008 032 544
- DE-A1- 102014 214 445

## Beschreibung

Die Erfindung betrifft ein Verfahren zum Betrieb eines Bremssystems eines Fahrzeugs mit elektromechanisch betätigten Radbremsen.

Bei hydraulischen Bremssystemen mit einer elektrischen Bremskraftverstärkung wird üblicherweise zentral in einer hydraulischen Steuereinheit ein Bremsdruck eingestellt, mit dem die Radbremsen beaufschlagt werden sollen. Hierzu kann beispielsweise vorgesehen sein, dass ein Elektromotor, beispielsweise ein bürstenloser Gleichstrommotor, einen Hydraulikzylinder oder einen Tandem-Hauptzylinder antreibt, der wiederum ein Bremsfluid mit einem Druck beaufschlagt. Über Hydraulikventile wird der so erzeugte Bremsdruck an die Druckzylinder der Radbremsen weitergeleitet. Dabei wird der Bremsdruck proportional zu einer Betätigung eines Bremspedals eingestellt und die Räder entsprechend gebremst.

Das Dokument DE 100 12 448 A1 beschreibt ein Verfahren zur Bremskraftverteilung bei einem Fahrzeug mit mindestens zwei gebremsten Achsen wobei während eines Bremsvorgangs eine Überhitzung der Radbremsen anhand bestimmter Kriterien ermittelt wird und bei einer erkannten Überhitzung die Radbremsen an einer vorderen Achse und an einer hinteren Achse abwechselnd mit Bremskraft beaufschlagt werden, zwecks Abkühlung der aktuell nicht mit Bremskraft beaufschlagten Radbremsen einer Achse.

Zum Halten von hohen Bremsdrücken, muss der Elektromotor mit einem hohen Drehmoment den Druck aufrechterhalten. In den Versorgungsleitungen des Elektromotors müssen dabei entsprechend große Ströme fließen. Bei einer länger anhaltenden Belastung dieser Art mit einem hohen Motorstrom kann der Elektromotor zu heiß werden. Um Schäden durch Überhitzung zu vermeiden, wird der Elektromotor in solchen Fällen entlastet, indem die Einlassventile der Radbremsen geschlossen werden und der anliegende Bremsdruck in den Radbremsen eingesperrt wird. Die Radbremsen bremsen dann weiterhin mit dem zuvor eingestellten Bremsdruck, während die elektrische Druckbereitstellung und mithin der Elektromotor von den Radzylinder entkoppelt ist und folglich der Motorstrom des Elektromotors reduziert werden kann. Eine Überhitzung des Elektromotors kann so effektiv vermieden werden.

Bei trockenen Bremssystemen mit elektromechanisch betätigten Radbremsen werden die Druckzylinder in den Radbremsen durch elektromechanische Aktoren bzw. Kraftsteller ersetzt. Zusammen mit einer entsprechenden Ansteuer-Elektronik am Rad (insbesondere Radbremssteuereinheiten, WCU) entstehen so eigenständige elektrische Radbremsen. Auch bei solchen elektromechanischen Radbremsen treibt üblicherweise ein Elektromotor eines Kraftstellers über ein Getriebe eine Stellvorrichtung an, die Bremsbeläge mit einer Zuspannkraft in Richtung eines Reibpartners, beispielsweise einer Bremsscheibe oder einer Bremstrommel, beaufschlagt. Zum Halten von hohen Zuspannkräften und mithin hohen Bremsmomenten, muss der Elektromotor das Getriebe mit einem hohen Drehmoment beaufschlagen und folglich mit einem hohen Motorstrom angesteuert werden. Folglich besteht bei einem Bremssystem mit elektromechanischen Radbremsen das Problem, dass bei langanhaltenden Bremsmanövern mit hohen Zuspannkräften der Elektromotor der Radbremse dauerhaft stark belastet ist und überhitzen kann.

Situationen, in denen eine solche Überhitzung der Elektromotoren der Radbremsen auftreten können, sind beispielsweise lange, sehr steile Bergabfahrten mit geringer Geschwindigkeit, insbesondere mit voll beladenem Fahrzeug und ggfs. einem angekoppelten Anhänger, oder sehr langsame Bergabfahrten auf losem Untergrund. In beiden Fällen würden zwar die Reibpartner der Radbremsen aufgrund der geringen Geschwindigkeiten nur eine geringe thermische Leistung aufnehmen, jedoch müsste der elektromotorische Antrieb der Radbremsen permanent mit hohem Motorstrom und betrieben werden und würde dementsprechend schnell überhitzen. Die Konsequenz wäre, dass ab einer bestimmten Temperatur der Elektromotoren das Fahrzeug festgesetzt werden müsste, da eine sichere Weiterfahrt nicht gewährleistet wäre.

Vor diesem Hintergrund liegt der vorliegenden Erfindung die technische Aufgabe zu Grunde, ein Verfahren zum Betrieb eines Bremssystems eines Fahrzeugs mit elektromechanisch betätigten Radbremsen anzugeben, das eine dauerhafte Bereitstellung eines hohen Bremsmoments durch elektromechanische Kraftsteller der Radbremsen bei gleichzeitiger Vermeidung einer Überhitzung der Kraftsteller gewährleistet.

Diese Aufgabe wird mit dem Verfahren gemäß Anspruch 1 gelöst. Bevorzugte Ausgestaltungen der Erfindung sind Gegenstand der abhängigen Ansprüche. Die Erfindung betrifft ein Verfahren zum Betrieb eines Bremssystems eines Fahrzeugs mit elektromechanisch betätigten Radbremsen und einer Steuereinheit, wobei die Radbremsen jeweils einen elektromechanischen Kraftsteller zur Beaufschlagung eines der jeweiligen Radbremse zugeordneten Fahrzeugrades mit einem Bremsmoment aufweisen. Das Verfahren weist dabei das Erfassen einer Bremsanforderung, das Ermitteln eines zur Umsetzung der Bremsanforderung durch die Kraftsteller der Radbremsen aufzubringenden Bremsmoments, das Ermitteln aktueller Temperaturen der Radbremsen und/oder von Komponenten der Radbremsen, das Ermitteln einer Geschwindigkeit des Fahrzeugs, wenn die ermittelten Temperatur wenigstens einer Radbremse und/oder der Komponenten der Radbremse über einem ersten Grenzwert und die ermittelte Geschwindigkeit unter einem zweiten Grenzwert liegt, das Ansteuern des Kraftstellers wenigstens einer Radbremse zur Bereitstellung eines Teils eines der Bremsanforderung entsprechenden Bremsmoments und mechanisches Verriegeln des Kraftstellers der wenigstens einen Radbremse in einer dem eingestellten Bremsmoment entsprechenden Betätigungsposition, und das Ansteuern der übrigen Radbremsen zur Bereitstellung des zur vollständigen Umsetzung der Bremsanforderung verbleibenden Bremsmoments auf, wobei die vorstehend genannten Schritte durch die Steuereinheit ausgeführt werden.

Der Erfindung liegt die Überlegung zugrunde, dass die Wärmeentwicklung in einem Bremssystem mit elektromechanischen Radbremsen eingeschränkt werden kann, indem ein konstantes Bremsmomentniveau nicht durch dauerhafte Bestromung eines elektromechanischen Kraftstellers erzeugt wird, sondern vielmehr durch eine gezielte mechanische Verriegelung des Kraftstellers in einer Betriebsposition, die eben jenem Bremsmomentniveau entspricht. Ist eine solche Verriegelung eingetreten, muss der Kraftsteller nicht mehr weiter in dem zuvor erforderlichen Maß bestromt werden, um konstant das geforderte Bremsmoment zu erzeugen, sodass die Wärmeentwicklung in dem Kraftsteller reduziert wird. Dabei ist der Teil des durch die Radbremse mit verriegeltem Kraftsteller bereitgestellten Bremsmoments vorzugsweise so gewählt, dass ein möglichst großer Anteil des insgesamt zur Umsetzung der Bremsanforderung erforderlichen Bremsmoments durch den verriegelten Kraftsteller erzeugt wird. Das zur vollständigen Umsetzung der Bremsanforderung verbleibende Bremsmoment wird dann durch die übrigen Radbremsen erzeugt. Dabei kann insbesondere auch von einer idealen Bremskraftverteilung abgewichen werden, sodass beispielsweise 90% einer erforderlichen Bremsleistung durch die Radbremsen der Hinterachse aufgebracht werden.

Die dabei verwendeten Grenzwerte für die Temperatur der Radbremsen bzw. der Komponenten der Radbremse, insbesondere der Temperatur des Kraftstellers der Radbremse, können entweder von vornherein als feststehende Parameter vorgegeben werden, oder dynamisch in Abhängigkeit einer Fahrsituation angepasst werden. Bei der Radbremse kann es sich dabei beispielsweise um eine Scheibenbremse oder eine Trommelbremse handeln. Grundsätzlich ist der beschriebene Ansatz jedoch auf jede Bremsenbauform anwendbar, die durch Ansteuerung eines elektromotorischen Kraftstellers ein Fahrzeugrad mit einem Bremsmoment beaufschlagen kann.

Bei der Wahl des Bremsmomentniveaus, das durch die Radbremse mit verriegeltem Kraftsteller bereitgestellt werden soll, ist ferner zu beachten, dass das der Radbremse mit verriegeltem Kraftsteller zugeordnete Fahrzeugrad nicht blockiert. Ein unbeabsichtigtes Blockieren eines Fahrzeugrads, das durch eine Radbremse mit einem verriegelten Kraftsteller mit einem Bremsmoment beaufschlagt wird, wird nach einer Ausführungsform daher dadurch vermieden, dass das durch den verriegelten Kraftsteller der wenigstens einen Radbremse bereitgestellte Bremsmoment um einen definierten Wert unterhalb eines Bremsmoments liegt, das zu einem Blockieren des der Radbremse zugeordneten Fahrzeugrads führen würde. So kann beispielsweise vorgesehen sein, dass das gewählte Bremsmomentniveau bei etwa 70% bis 90% eines Bremsmoments festgelegt wird, bei dem auf Grundlage aktueller Betriebsinformationen des Fahrzeugs ein Blockieren des Fahrzeugrades zu erwarten wäre.

Dabei wird bevorzugt weiterhin fortlaufend der Schlupf der Fahrzeugräder daraufhin überwacht, ob Fahrzeugräder drohen zu blockieren. Sobald ermittelt wird, dass die Fahrzeugräder kurz davor sind zu blockieren, oder bereits blockiert sind, wird umgehend die Verriegelung des Kraftstellers gelöst, sodass sich die Radbremse entspannen kann und die Räder in einen akzeptablen Schlupfbereich rückgeführt werden. Anschließend kann der Kraftsteller bei einem niedrigeren Bremsmomentniveau wieder verriegelt werden.

Neben der Vermeidung eines blockierenden Rades infolge eines verriegelten Kraftstellers, ist bei der Wahl des durch den verriegelten Kraftsteller bereitgestellten Bremsmomentniveaus ferner zu beachten, dass sich die Bremsanforderung und mithin das zur Umsetzung erforderliche Bremsmoment fortlaufend ändern kann. In dem zuvor beschriebenen Szenario einer langsamen Bergabfahrt auf rutschigem Untergrund, wird ein Fahrzeugführer das Bremspedal immer wieder leicht lösen und anschließend, wenn die Fahrzeuggeschwindigkeit etwas gestiegen ist, wieder stärker betätigen. Das durch den verriegelten Kraftsteller bereitgestellte Bremsmomentniveau ist daher bevorzugt so eingestellt, dass das zur vollständigen Umsetzung der Bremsanforderung verbleibende Bremsmoment ausreicht, um Schwankungen der Bremsanforderung des Fahrzeugführers abzubilden.

Die Entlastung der elektromechanischen Radbremsen durch ein gezieltes Verriegeln einzelner Radbremsen wird dabei nach einer weiteren Ausführungsform dadurch verbessert, dass der Anteil des durch den verriegelten Kraftsteller der wenigstens einen Radbremse bereitgestellten Bremsmoments an dem insgesamt zur Umsetzung der Bremsanforderung erforderlichen Bremsmoment invers proportional zu einer Änderungsrate der Bremsanforderung ist. So kann ein umso größerer Anteil der Bremsanforderung durch den verriegelten Kraftsteller umgesetzt, je weniger stark die Bremsanforderung über die Zeit schwankt. Je geringer dabei die durch die aktiv bestromten Radbremsen erzeugten Bremsmomente sein müssen, desto weniger stark fällt die thermische Belastung der Radbremsen bzw. der Komponenten der Radbremsen, insbesondere des elektromechanischen Kraftstellers aus.

Nach einer bevorzugten Ausführungsform ist ferner vorgesehen, dass wenn die ermittelte Temperatur wenigstens einer Radbremse über einem ersten Grenzwert und die ermittelte Geschwindigkeit unter einem zweiten Grenzwert liegt, die Kraftstellers der Radbremsen einer Fahrzeugachse zur Bereitstellung eines Teils eines der Bremsanforderung entsprechenden Bremsmoments angesteuert und die Kraftstellers der Radbremsen der Fahrzeugachse in einer dem eingestellten Bremsmoment entsprechenden Betätigungsposition verriegelt werden. Eine achsweise Verriegelung der Kraftsteller der jeweiligen Radbremsen hat dabei den Vorteil, dass die entsprechenden eingestellten Bremskräfte nur ein geringes, idealerweise kein auf das Fahrzeug wirkendes Giermoment erzeugen. Ein Giermoment würde sich in dieser Konstellation nur dann einstellen, wenn die Fahrzeugräder unterschiedlich starken Schlupf hätten, beispielsweise infolge unterschiedlicher Straßenbeläge oder unterschiedlicher Reibwerte der Reifen.

Dabei kann ferner vorgesehen sein, dass nach dem Verriegeln der Kraftsteller der Radbremsen einer Achse überprüft wird, ob sich eine Gierbewegung des Fahrzeugs einstellt. Sollte dabei erkannt werden, dass das Verriegeln der Kraftsteller ein Giermoment verursacht, können die jeweils durch die Kraftsteller der Radbremsen eingestellten Bremsmomente so angepasst werden, dass das Giermoment ausgeglichen wird.

Dabei ist nach einer bevorzugten Ausführungsform ferner vorgesehen, dass es sich bei der Fahrzeugachse um eine Hinterachse des Fahrzeugs handelt. Auf diese Weise wird die zur Steuerung des Fahrzeugs eingesetzte Vorderachse durch nur geringfügig durch ein Verzögerungsmoment beeinflusst und muss im Idealfall nur geringe Kräfte in Längsrichtung des Fahrzeugs übertragen.

Nach einer weiteren Ausführungsform ist ferner vorgesehen, dass die Kraftsteller jeweils einen elektromotorischen Antrieb und ein dem Antrieb nachgeschaltetes Getriebe aufweisen, wobei das Verriegeln eines Kraftstellers durch eine mechanische Blockade des elektromotorischen Antriebs oder des Getriebes erfolgt. Hierzu kann beispielsweise vorgesehen sein, dass auf einer mit dem elektromotorischen Antrieb verbundenen Antriebswelle ein Zahnrad drehfest angeordnet ist, wobei zur Verriegelung des Kraftstellers ein Blockierzahn das Zahnrad eingreift und eine weitere Rotation des Zahnrads und mithin des Antriebs verhindert. Alternativ kann ein solcher Blockierzahn auch direkt in ein Zahnrad des Getriebes eingreifen. Neben einer solchen oder ähnlichen Blockade durch einen Formschluss kann ferner auch vorgesehen sein, dass der Antrieb oder das Getriebe durch einen Reibschluss blockiert werden, beispielsweise durch eine Bremsvorrichtung, die auf den Rotor des Motors, die Antriebswelle oder ein Getriebeelement wirkt.

Häufig ist eine direkte Messung einer Temperatur innerhalb einer Radbremse schwer möglich und erfordert einen erheblichen Montageaufwand. Daher ist nach einer weiteren Ausführungsform ferner vorgesehen, dass die Temperatur der Radbremsen und/oder von Komponenten der Radbremsen aus Betriebsparametern der Radbremsen abgeschätzt wird. Beispielsweise kann aus der Dauer eines Bremsvorgangs in Zusammenschau mit den Betriebsparametern des Kraftstellers für die Dauer des Bremsvorgangs aus einem Modell eine in dem Motor anfallende Wärmemenge abgeschätzt werden. Aus dieser Information und gegebenenfalls unter Berücksichtigung weiterer Randbedingungen, wie der Umgebungstemperatur, einer Fahrgeschwindigkeit oder ähnlichem, kann dann die Temperatur des Kraftstellers, bzw. der elektronischen Komponenten des Kraftstellers abgeschätzt werden. Auf diese Weise kann auf eine direkte Messung der Temperatur durch entsprechende Sensoren verzichtet werden.

Dabei ist nach einer weiteren Ausführungsform ferner vorgesehen, dass es sich bei der wenigstens einen Radbremse, deren Kraftsteller mechanisch verriegelt wird, um jene Radbremse des Bremssystems mit der höchsten Temperatur handelt.

Mitunter kann es vorkommen, dass Radbremsen aufgrund einer kurzzeitigen, aber starken Belastung bereits auf hohe Betriebstemperaturen erhitzt werden, was sich auch in einer entsprechenden Temperatur des Kraftstellers oder dessen Komponenten niederschlagen kann. Um eine fehlerhafte Ansteuerung der Radbremsen zur Verriegelung des Kraftstellers zu vermeiden, ist nach einer weiteren Ausführungsform vorgesehen, dass zusätzlich zu der Temperatur der Radbremsen und/oder von Komponenten der Radbremsen und der Geschwindigkeit ein Neigungswinkel des Fahrzeugs ermittelt wird, wobei der Kraftsteller der wenigstens einen Radbremse nur dann verriegelt wird, wenn der Neigungswinkel des Fahrzeugs oberhalb eines definierten Grenzwerts liegt. So kann eine temporäre Aufheizung eines Kraftstellers aufgrund einer kurzen, aber sehr starken Verzögerung des Fahrzeugs von einer dauerhaften Belastung der Radbremsen auf Grund einer Bergabfahrt unterschieden werden. Der ermittelte Neigungswinkel kann dabei auch mittels eines Längsbeschleunigungssensors oder einer Standortinformation des Fahrzeugs (GPS) und einer Kenntnis der Fahrbahnbeschaffenheit plausibilisiert werden.

Ferner ist nach einer bevorzugten Ausführungsform vorgesehen, dass die wenigstens eine Radbremse eine Parkbremsfunktion aufweist, wobei das Verriegeln des Kraftstellers der wenigstens einen Radbremse durch Aktivierung der Parkbremsfunktion erfolgt. Dabei wird das durch den Kraftsteller zu erzeugende Bremsmoment durch die Parkbremsfunktion bereitgestellt. Auf diese Weise kann auf eine ohnehin vorhandene Infrastruktur zur dauerhaften Einstellung eines Bremsmoments zurückgegriffen werden, sodass eine gesonderte Anpassung einer Radbremse im Sinne einer Betriebsbremse nicht notwendig ist.

Bei dem zuvor beschriebenen Verfahren wurden stets die Verfahrensschritte in einer bestimmten Reihenfolge angegeben. Die hierbei angegebene Reihenfolge ist jedoch nicht beschränkend auszulegen, da die einzelnen Verfahrensschritte des Verfahrens in ihrer Reihenfolge auch verändert werden können, sofern eine solche Veränderung der Reihenfolge logisch sinnvoll bzw. technisch umsetzbar ist.

Im Folgenden werden bevorzugte Ausgestaltungen der Erfindung anhand der Zeichnungen näher erläutert. Dabei zeigen:
- Figur 1: eine schematische Darstellung eines Fahrzeugs mit einem elektromechanischen Bremssystem und
- Figur 2: ein Flussdiagramm eines beispielhaften Verfahrens.

Im Folgenden werden einander ähnliche oder identische Merkmale mit denselben Bezugszeichen gekennzeichnet.

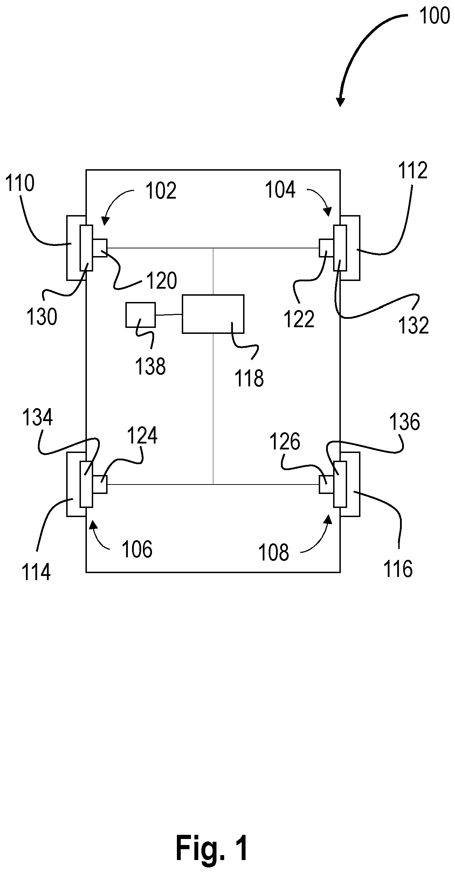

Die Figur 1 zeigt eine schematische Darstellung eines Fahrzeugs 100 mit einem beispielhaften Bremssystem, das vier elektromechanisch betätigte Radbremsen 102, 104, 106 und 108 aufweist. Das dargestellte Bremssystem dient hierbei nur zur Erläuterung der Erfindung und ist nicht beschränkend zu verstehen. So kann das Verfahren durchaus auch in einem Bremssystem umgesetzt werden, das beispielweise nur zwei elektromechanisch betätigte Radbremsen und zwei hydraulisch betätigte Radbremsen aufweist.

Die Radbremsen 102, 104, 106 und 108 sind dabei jeweils Fahrzeugrädern 110, 112, 114 und 116 zugeordnet und dazu ausgebildet, die Fahrzeugräder 110, 112, 114 und 116 mit einem Bremsmoment zu beaufschlagen. Unter einem "Bremsmoment" ist dabei ein Drehmoment zu verstehen, das einer Rotation des Fahrzeugrades entgegenwirkt. Hierzu weisen die Radbremsen 102, 104, 106 und 108 jeweils elektromechanische Kraftsteller 120, 122, 124 und 126 auf, die bei entsprechender Ansteuerung durch eine Steuereinheit 118 des Bremssystems einen drehfest mit dem jeweiligen Fahrzeugrad verbundenen Reibkörper 130, 132, 134 oder 136 mit einer Reibungskraft beaufschlagen.

Insbesondere kann es sich bei den Radbremsen 102, 104, 106 und 108 um Scheibenbremsen handeln, bei denen eine drehfest mit dem jeweiligen Fahrzeugrad 110, 112, 114 oder 116 verbundene Bremsscheibe als Reibkörper 130, 132, 134 oder 136 zwischen zwei Reibbeläge angeordnet ist. Die Reibbeläge werden dabei durch den jeweiligen Kraftsteller 120, 122, 124 oder 126 mit einer Kraft in Richtung der Bremsscheibe beaufschlagt. Durch die so entstehende Reibung zwischen Reibbelag und Bremsscheibe wirkt ein Bremsmoment auf die Bremsscheibe und mithin auf das Fahrzeugrad 110, 112, 114 oder 116.

Bei dem elektromechanischen Kraftsteller 120, 122, 124 und 126 kann es sich beispielsweise um eine Anordnung aus einem elektromotorischen Antrieb und einem dem Antrieb nachgeschalteten Getriebe handeln. Bei dem Getriebe handelt es sich dabei um ein Rotations-Translation-Getriebe, dass eine Rotation eine Antriebswelle des elektromotorischen Antriebs in eine Translation eines Druckkolbens der Radbremse 102, 104, 106 oder 108 umwandelt. Ein auf dem Druckkolben angeordnete Reibbelag kann so gezielt mit einer Kraft in Richtung der Bremsscheibe beaufschlagt werden. Die Stärke dieser Kraft, auch Zuspannkraft genannt, ist dabei proportional zu dem Motorstrom, der an dem jeweiligen elektromotorischen Antrieb anliegt.

Die Ansteuerung des zuvor beschriebenen Bremssystems erfolgt dabei durch die Steuereinheit 118, welche in Folge eine Bremsbetätigung entsprechende Steuersignale an die Radbremsen 102, 104, 106 und 108 übermittelt. Die Betätigung der Bremse wird dabei über eine Bremsbetätigungseinheit 138, beispielsweise ein Bremspedal, erfasst.

Wie zuvor bereits ausgeführt wurde, kann es in einer solchen Konstellation bei langanhaltenden starken Bremsvorgängen aufgrund der hohen anliegenden Motorströme an den Kraftsteller in 120, 122, 124 und 126 zu einer starken Hitzeentwicklung kommen. Um eine Notabschaltung des Bremssystems bzw. Stilllegung des Fahrzeugs aufgrund einer Überhitzung des Bremssystems zu verhindern, ist nach einer Ausgestaltung der Erfindung vorgesehen, den elektromotorischen Antrieb oder das Getriebe wenigstens eines der elektromotorischen Kraftsteller 120, 122, 124 oder 126 nach Einstellung eines geeigneten Bremsmoments mechanisch zu verriegeln, sodass der elektromotorischen Kraftsteller 120, 122, 124 oder 126 nicht weiter bestromt und folglich nicht weiter aufgeheizt wird.

Eine solche Verriegelung kann dabei insbesondere dergestalt sein, dass eine weitere Betätigung des elektromotorischen Kraftstellers 120, 122, 124 oder 126 in Kraftaufbaurichtung der zugeordneten Radbremse 102, 104, 106 oder 108 zur Erhöhung der Zuspannkraft weiterhin möglich bleibt und lediglich eine Betätigung in Kraftabbaurichtung, also eine Reduzierung der Zuspannkraft, verhindert wird. So kann beispielsweise ein Nachspannen einer verriegelten Radbremse 102, 104, 106 oder 108, also ein nachträgliches Erhöhen der anliegenden Zuspannkraft, weiterhin erfolgen, ohne die Verriegelung lösen zu müssen. Grundsätzlich kann eine Verriegelung jedoch neben der Kraftabbaurichtung auch die Kraftaufbaurichtung betreffen.

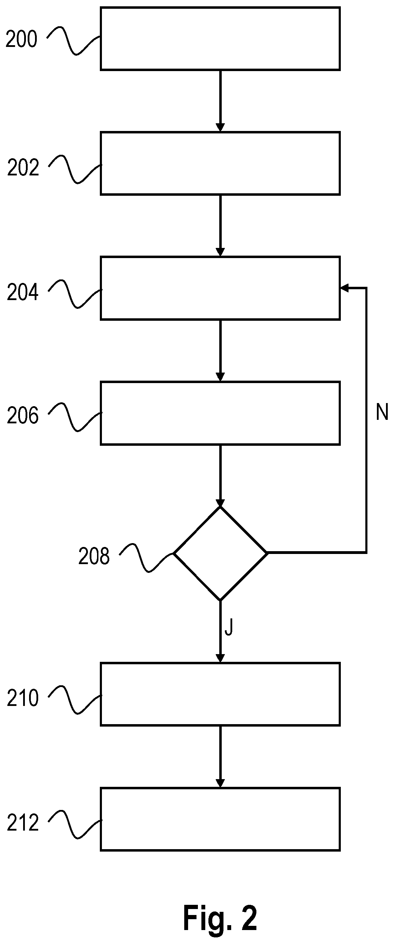

Hierzu wird im Folgenden mit Bezug auf die Figur 2 eine beispielhafte Ausgestaltung eines Verfahrens zum Betrieb des Bremssystems des zuvor beschriebenen Fahrzeugs 100 beschrieben.

Dabei wird in einem ersten Verfahrensschritt 200 eine Bremsanforderung erfasst. Dies kann beispielsweise infolge einer Betätigung der Bremsbetätigungseinheit 138 durch die Fahrzeugführer erfolgen. Das entsprechende Betätigungssignal wird dann an die Steuereinheit 118 weitergeleitet.

In einem nachfolgenden Verfahrensschritt 202 wird dann durch die Steuereinheit 118 ermittelt, welches Bremsmoment durch die Kraftsteller 120, 122, 124 und 126 der Radbremsen 102, 104, 106 und 108 zur Umsetzung der empfangenen Bremsanforderung aufgebracht werden muss. Hierzu kann Beispielsweise eine Kennlinie verwendet werden, die einem eingehenden Bremsbetätigungssignal ein aufzubringendes Bremsmoment zuordnet. Ferner kann hier auch vorgesehen sein, dass zunächst eine Bremskraft ermittelt wird, die zur Umsetzung der Bremsanforderung erforderlich ist, wobei anschließend aus der so ermittelten Bremskraft die jeweils durch die Radbremsen 102, 104, 106 und 108 aufzubringen Bremsmomente bestimmt werden. Dabei kann bei der Ableitung der Bremsmomente aus der Bremskraft jeweils auf spezifische Eigenheiten der Radbremsen, beispielsweise hinsichtlich ihrer Position im Fahrzeug 100 oder ihrer Dimensionierung, Rücksicht genommen werden.

In einem weiteren Verfahrensschritt 204 wird dann die aktuelle Temperatur der Radbremsen 102, 104, 106 und 108, oder von Komponenten der Radbremsen 102, 104, 106 und 108 ermittelt. Bei den Komponenten kann es sich insbesondere um die Kraftsteller 120, 122, 124 und 126 handeln. Zur Bestimmung der aktuellen Temperatur kann beispielsweise auf Temperatursensoren innerhalb der Radbremsen 102, 104, 106 und 108 zurückgegriffen werden. Alternativ hierzu kann die Temperatur jedoch auch aus Betriebsparametern der Radbremsen 102, 104, 106 und 108 bei vorangegangenen Bremsvorgängen abgeschätzt werden. So gibt beispielsweise eine anliegende Zuspannkraft bei gegebener Dauer des Bremsvorgangs Aufschluss darüber, welche Wärmemenge in der Radbremse 102, 104, 106 oder 108 erzeugt wurde. Ferner können auch Betriebsparameter der Kraftsteller 120, 122, 124 und 126, insbesondere anliegende Motorströme, einen Aufschluss darüber geben, welche Wärmemenge in den Kraftstellern 120, 122, 124 und 126 bei vorangegangenen Bremsmanövern angefallen ist.

Neben der Temperatur wird in einem weiteren Verfahrensschritt 206 ferner die Geschwindigkeit des Fahrzeugs 100 ermittelt, beispielsweise aus einer Betrachtung der Raddrehzahlen des Fahrzeugs 100.

In Verfahrensschritt 208 wird geprüft, ob die ermittelte Temperatur über einem ersten Grenzwert und die ermittelte Geschwindigkeit unter einem zweiten Grenzwert liegt. Dabei können die verwendeten Grenzwerte sowohl als vordefinierte Parameter vorgegeben sein, oder dynamisch in Abhängigkeit einer Fahrsituation des Fahrzeugs 100 angepasst werden. Ferner kann neben der Temperatur und der Geschwindigkeit in diesem Verfahrensschritt auch eine Neigung des Fahrzeugs 100 berücksichtigt werden, die darüber Aufschluss gibt, ob sich das Fahrzeug 100 in einer Bergabfahrt befindet. Wird dabei ermittelt, dass die Temperatur unterhalb des ersten Grenzwerts liegt oder die Geschwindigkeit des Fahrzeugs über den zweiten Grenzwert, wird die Bremsanforderung in bekanntem Maße umgesetzt und das Verfahren springt zurück zur Verfahrensschritt 204, in dem die Temperatur der Radbremsen 102, 104, 106 und 108 und/oder in Komponenten der Radbremsen 102, 104, 106 und 108 ermittelt wird.

Wird hingegen ermittelt, dass die Temperatur der Radbremsen 102, 104, 106 und 108 über dem ersten Grenzwert und die Geschwindigkeit des Fahrzeugs 100 unter dem zweiten Grenzwert liegt, werden in Schritt 210 die Kraftsteller 124 und 126 der Radbremsen 106 und 108 der Hinterachse des Fahrzeugs 100 so angesteuert, dass durch die Radbremsen 106 und 108 ein möglichst großer Teil der zur Umsetzung der Bremsanforderung erforderlichen Bremsmomente erbracht wird. Dabei kann Beispielsweise vorgesehen sein, dass die Radbremsen 106 und 108 der Hinterachse mit einem Bremsmoment beaufschlagt werden, das einen möglichst großen Teil der erforderlichen Bremskraft zur Umsetzung der Bremsanforderung, beispielsweise etwa 70% bis 90 % der erforderlichen Bremskraft, erzeugt. Dabei wird jedoch auch beachtet, dass die eingestellten Bremsmomente der Radbremsen 106 und 108 Hinterachse des Fahrzeugs 100 nicht zu einer Blockade der Fahrzeugräder 114 und 116 führen. Hierzu kann beispielsweise abgeschätzt werden, ab welchem Bremsmoment die Fahrzeugräder 114 und 116 blockieren würden, wobei das eingestellte Bremsmoment um einen definierten Betrag oder einen definierten Prozentsatz unterhalb dieses Bremsmoments eingestellt wird.

Die so eingestellten Radbremsen 106 und 108 beziehungsweise Kraftsteller 124 und 126 der Hinterachse werden dann mechanisch verriegelt. Das bedeutet, dass durch die Radbremsen 106 und 108 weiterhin das zuvor eingestellte Bremsmoment erzeugt wird, die Kraftsteller 124 und 126 jedoch nicht mehr in dem zuvor zur Einstellung des Bremsmoments erforderlichen Maße aktiv bestromt werden. Als Folge hiervon wird die Wärmeentwicklung in eben diesen Radbremsen 106 und 108 und deren Komponenten begrenzt, sodass eine Zwangsabschaltung des Bremssystems und eine Stilllegung des Fahrzeugs 100 verhindert werden kann.

Die Radbremsen 102 und 104 der Vorderachse des Fahrzeugs 100 werden ferner in Verfahrensschritt 212 so angesteuert, dass durch die Radbremsen 102 und 104 jeweils ein Bremsmoment aufgebracht wird, das in Zusammenschau mit der durch die Radbremsen 106 und 108 der Hinterachse des Fahrzeugs 100 Bremskraft die vollständige Umsetzung der empfangenen Bremsanforderung bedeutet. Folglich wird insgesamt ein möglichst großer Teil der zur Umsetzung der Bremsanforderung erforderlichen Bremskraft durch die Radbremsen 106 und 108 der Hinterachse des Fahrzeugs 100 bereitgestellt, während ein kleinerer Teil der Bremsanforderung durch die Radbremsen 102 und 104 der Vorderachse umgesetzt wird. Dabei kann durch die Radbremsen 102 und 104 der Vorderachse des Fahrzeugs insbesondere auch eine Veränderung der Bremsanforderung infolge einer veränderten Betätigung der Bremsbetätigungseinheit 138 durch den Fahrzeugführer abgebildet werden.

Trotz der mechanischen Verriegelung der Kraftsteller 124 und 126 der Radbremsen 106 und 108 Hinterachse des Fahrzeugs 100, wird fortlaufend überwacht, ob die Hinterräder 114 und 116 drohen zu blockieren. Hierzu kann beispielsweise eine Raddrehzahl der Räder 114 und 116 mit den Raddrehzahlen der Vorderräder 110 und 112 verglichen werden. Wird dabei festgestellt, dass die Fahrzeugräder 114 oder 116 drohen zu blockieren, wird die Verriegelung des Kraftstellers 124 oder 126 des jeweiligen Fahrzeugrades 114 oder 116 gelöst, sodass sich die jeweilige Radbremse 106 oder 108 entspannt und das Fahrzeugrad 114 oder 116 wieder in einen annehmbaren Schlupfbereich rückgeführt werden kann.

Bei den vorstehend beschriebenen Verfahrensschritten handelt es sich um eine beispielhafte Ausgestaltung des Verfahrens. Änderungen sind möglich im Rahmen des durch die nachstehenden Ansprüche definierten Schutzumfangs.

## Patentansprüche

1. Verfahren zum Betrieb eines Bremssystems eines Fahrzeugs (100) mit elektromechanisch betätigten Radbremsen (102, 104, 106, 108) und einer Steuereinheit (118), wobei die Radbremsen (102, 104, 106, 108) jeweils einen elektromechanischen Kraftsteller (120, 122, 124, 126) zur Beaufschlagung eines der jeweiligen Radbremse (102, 104, 106, 108) zugeordneten Fahrzeugrades (110, 112, 114, 116) mit einem Bremsmoment aufweisen, wobei das Verfahren die Ausführung der nachfolgenden Schritte durch die Steuereinheit (118) aufweist:
• Erfassen einer Bremsanforderung,
• Ermitteln eines zur Umsetzung der Bremsanforderung durch die Kraftsteller (120, 122, 124, 126) der Radbremsen (102, 104, 106, 108) aufzubringenden Bremsmoments,
• Ermitteln aktueller Temperaturen der Radbremsen (102, 104, 106, 108) und/oder von Komponenten der Radbremsen (102, 104, 106, 108),
• Ermitteln einer Geschwindigkeit des Fahrzeugs (100),
• Wenn die ermittelten Temperatur wenigstens einer Radbremse (102, 104, 106, 108) und/oder der Komponenten der Radbremse (102, 104, 106, 108) über einem ersten Grenzwert und die ermittelte Geschwindigkeit unter einem zweiten Grenzwert liegt, Ansteuern des Kraftstellers (120, 122, 124, 126) wenigstens einer Radbremse (102, 104, 106, 108) zur Bereitstellung eines Teils eines der Bremsanforderung entsprechenden Bremsmoments und mechanisches Verriegeln des Kraftstellers (120, 122, 124, 126) der wenigstens einen Radbremse (102, 104, 106, 108) in einer dem eingestellten Bremsmoment entsprechenden Betätigungsposition,
• Ansteuern der übrigen Radbremsen (102, 104, 106, 108) zur Bereitstellung des zur vollständigen Umsetzung der Bremsanforderung verbleibenden Bremsmoments.

2. Verfahren nach Anspruch 1, **dadurch gekennzeichnet, dass** das durch den verriegelten Kraftsteller (120, 122, 124, 126) der wenigstens einen Radbremse (102, 104, 106, 108) bereitgestellte Bremsmoment um einen definierten Wert unterhalb eines Bremsmoments liegt, das zu einem Blockieren des der Radbremse (102, 104, 106, 108) zugeordneten Fahrzeugrads (110, 112, 114, 116) führen würde.

3. Verfahren nach Anspruch 1 **oder 2, dadurch gekennzeichnet, dass** der Anteil des durch den verriegelten Kraftsteller (120, 122, 124, 126) der wenigstens einen Radbremse (102, 104, 106, 108) bereitgestellten Bremsmoments an dem insgesamt zur Umsetzung der Bremsanforderung erforderlichen Bremsmoment invers proportional zu einer Änderungsrate der Bremsanforderung ist.

4. Verfahren nach einem der vorherigen Ansprüche, **dadurch gekennzeichnet, dass** wenn die ermittelte Temperatur wenigstens einer Radbremse (102, 104, 106, 108) über einem ersten Grenzwert und die ermittelte Geschwindigkeit unter einem zweiten Grenzwert liegt, die Kraftstellers (120, 122, 124, 126) der Radbremsen (102, 104, 106, 108) einer Fahrzeugachse zur Bereitstellung eines Teils eines der Bremsanforderung entsprechenden Bremsmoments angesteuert und die Kraftstellers (120, 122, 124, 126) der Radbremsen (102, 104, 106, 108) der Fahrzeugachse in einer dem eingestellten Bremsmoment entsprechenden Betätigungsposition verriegelt werden.

5. Verfahren nach Anspruch 4, **dadurch gekennzeichnet, dass** es sich bei der Fahrzeugachse um eine Hinterachse des Fahrzeugs (100) handelt.

6. Verfahren nach einem der vorherigen Ansprüche, **dadurch gekennzeichnet, dass** die Kraftsteller (120, 122, 124, 126) jeweils einen elektromotorischen Antrieb und ein dem Antrieb nachgeschaltetes Getriebe aufweisen, wobei das Verriegeln eines Kraftstellers (120, 122, 124, 126) durch eine mechanische Blockade des elektromotorischen Antriebs oder des Getriebes erfolgt.

7. Verfahren nach einem der vorherigen Ansprüche, **dadurch gekennzeichnet, dass** die Temperatur der Radbremsen (102, 104, 106, 108) und/oder von Komponenten der Radbremsen (102, 104, 106, 108) aus Betriebsparametern der Radbremsen (102, 104, 106, 108) abgeschätzt wird.

8. Verfahren nach einem der vorherigen Ansprüche, **dadurch gekennzeichnet, dass** es sich bei der wenigstens einen Radbremse (102, 104, 106, 108), deren Kraftsteller (120, 122, 124, 126) mechanisch verriegelt wird, um jene Radbremse (102, 104, 106, 108) des Bremssystems mit der höchsten Temperatur handelt.

9. Verfahren nach einem der vorherigen Ansprüche, **dadurch gekennzeichnet, dass** zusätzlich zu der Temperatur der Radbremsen (102, 104, 106, 108) und/oder von Komponenten der Radbremsen (102, 104, 106, 108) und der Geschwindigkeit ein Neigungswinkel des Fahrzeugs (100) ermittelt wird, wobei der Kraftsteller (120, 122, 124, 126) der wenigstens einen Radbremse (102, 104, 106, 108) nur dann verriegelt wird, wenn der Neigungswinkel des Fahrzeugs (100) oberhalb eines definierten Grenzwerts liegt.

10. Verfahren nach einem der vorherigen Ansprüche, **dadurch gekennzeichnet, dass** die wenigstens eine Radbremse (102, 104, 106, 108) eine Parkbremsfunktion aufweist, wobei das Verriegeln des Kraftstellers (120, 122, 124, 126) der wenigstens einen Radbremse (102, 104, 106, 108) durch Aktivierung der Parkbremsfunktion erfolgt.

## Claims

1. A method for operating a brake system of a vehicle (100) having electromechanically actuated wheel brakes (102, 104, 106, 108) and a control unit (118), wherein the wheel brakes (102, 104, 106, 108) each have an electromechanical force actuator (120, 122, 124, 126) for applying a braking torque to a vehicle wheel (110, 112, 114, 116) assigned to the respective wheel brake (102, 104, 106, 108), wherein the method comprises the execution of the following steps by the control unit (118):
• detecting a braking request,
• determining a braking torque to be applied by the force actuators (120, 122, 124, 126) of the wheel brakes (102, 104, 106, 108) in order to implement the braking request,
• determining current temperatures of the wheel brakes (102, 104, 106, 108) and/or of components of the wheel brakes (102, 104, 106, 108),
• determining a speed of the vehicle (100),
• if the determined temperature of at least one wheel brake (102, 104, 106, 108) and/or of the components of the wheel brake (102, 104, 106, 108) is above a first limiting value and the determined speed is below a second limiting value, actuating the force actuator (120, 122, 124, 126) of at least one wheel brake (102, 104, 106, 108) to provide a part of a braking torque corresponding to the braking request, and mechanically locking the force actuator (120, 122, 124, 126) of the at least one wheel brake (102, 104, 106, 108) in an actuation position corresponding to the set braking torque,
• actuating the other wheel brakes (102, 104, 106, 108) to provide the braking torque remaining for complete implementation of the braking request.

2. The method as claimed in claim 1, **characterized in that** the braking torque provided by the locked force actuator (120, 122, 124, 126) of the at least one wheel brake (102, 104, 106, 108) is, by a defined value, below a braking torque which would result in locking of the vehicle wheel (110, 112, 114, 116) assigned to the wheel brake (102, 104, 106, 108).

3. The method as claimed in claim 1 or 2, **characterized in that** the proportion of the braking torque provided by the locked force actuator (120, 122, 124, 126) of the at least one wheel brake (102, 104, 106, 108) to the total braking torque required to implement the braking request is inversely proportional to a rate of change of the braking request.

4. The method as claimed in any one of the preceding claims, **characterized in that**, if the determined temperature of at least one wheel brake (102, 104, 106, 108) is above a first limiting value and the determined speed is below a second limiting value, the force actuator (120, 122, 124, 126) of the wheel brakes (102, 104, 106, 108) of a vehicle axle is actuated to provide a part of a braking torque corresponding to the braking request, and the force actuators (120, 122, 124, 126) of the wheel brakes (102, 104, 106, 108) of the vehicle axle are locked in an actuation position corresponding to the set braking torque.

5. The method as claimed in claim 4, **characterized in that** the vehicle axle is a rear axle of the vehicle (100).

6. The method as claimed in any one of the preceding claims, **characterized in that** the force actuators (120, 122, 124, 126) each have an electromotive drive and a transmission connected downstream of the drive, wherein the locking of a force actuator (120, 122, 124, 126) is carried out by a mechanical blockade of the electromotive drive or of the transmission.

7. The method as claimed in any one of the preceding claims, **characterized in that** the temperature of the wheel brakes (102, 104, 106, 108) and/or of components of the wheel brakes (102, 104, 106, 108) is estimated from operating parameters of the wheel brakes (102, 104, 106, 108).

8. The method as claimed in any one of the preceding claims, **characterized in that** the at least one wheel brake (102, 104, 106, 108), the force actuator (120, 122, 124, 126) of which is mechanically locked, is the wheel brake (102, 104, 106, 108) of the brake system having the highest temperature.

9. The method as claimed in any of the preceding claims, **characterized in that**, in addition to the temperature of the wheel brakes (102, 104, 106, 108) and/or of components of the wheel brakes (102, 104, 106, 108) and the speed, an inclination angle of the vehicle (100) is determined, wherein the force actuator (120, 122, 124, 126) of the at least one wheel brake (102, 104, 106, 108) is locked only if the inclination angle of the vehicle (100) is above a defined limiting value.

10. The method as claimed in any one of the preceding claims, **characterized in that** the at least one wheel brake (102, 104, 106, 108) has a parking brake function, wherein the force actuator (120, 122, 124, 126) of the at least one wheel brake (102, 104, 106, 108) is locked by activating the parking brake function.

## Revendications

1. Procédé de fonctionnement d'un système de freinage de véhicule (100) avec des freins de roue à commande électromécanique (102, 104, 106, 108) et une unité de commande (118), dans lequel les freins de roue (102, 104, 106, 108) comprennent chacun un actionneur de force électromécanique (120, 122, 124, 126) pour appliquer un couple de freinage à une roue du véhicule (110, 112, 114, 116) affectée au frein de roue respectif (102, 104, 106, 108), dans lequel le procédé comprend l'exécution des étapes suivantes par l'unité de commande (118) :
• la détection d'une demande de freinage,
• la détermination d'un couple de freinage à appliquer par les actionneurs de force (120, 122, 124, 126) des freins de roue (102, 104, 106, 108) pour mettre en œuvre la demande de freinage,
• la détermination des températures actuelles des freins de roue (102, 104, 106, 108) et/ou des composants des freins de roue (102, 104, 106, 108),
• la détermination d'une vitesse du véhicule (100),
• lorsque la température déterminée d'au moins un frein de roue (102, 104, 106, 108) et/ou des composants du frein de roue (102, 104, 106, 108) est supérieure à une première valeur limite et la vitesse déterminée est inférieure à une deuxième valeur limite, l'actionnement de l'actionneur de force (120, 122, 124, 126) d'au moins un frein de roue (102, 104, 106, 108) pour mettre à disposition une partie du couple de freinage correspondant à la demande de freinage et le verrouillage mécanique de l'actionneur de force (120, 122, 124, 126) de l'au moins un frein de roue (102, 104, 106, 108) dans une position d'actionnement correspondant au couple de freinage réglé,
• l'actionnement des freins de roue restants (102, 104, 106, 108) pour fournir le couple de freinage restant nécessaire pour mettre pleinement en œuvre la demande de freinage.

2. Procédé selon la revendication 1, **caractérisé en ce que** le couple de freinage fourni par l'actionneur de force verrouillé (120, 122, 124, 126) de l'au moins un frein de roue (102, 104, 106, 108) est inférieur d'une valeur définie à un couple de freinage qui entraînerait un blocage de la roue du véhicule (110, 112, 114, 116) associée au frein de roue (102, 104, 106, 108).

3. Procédé selon la revendication 1 ou 2, **caractérisé en ce que** la proportion du couple de freinage fourni par l'actionneur de force verrouillé (120, 122, 124, 126) de l'au moins un frein de roue (102, 104, 106, 108) dans le couple de freinage total nécessaire pour mettre en œuvre la demande de freinage est inversement proportionnelle à un taux de variation de la demande de freinage.

4. Procédé selon l'une quelconque des revendications précédentes, **caractérisé en ce que** lorsque la température déterminée d'au moins un frein de roue (102, 104, 106, 108) est supérieure à une première valeur limite et que la vitesse déterminée est inférieure à une deuxième valeur limite, les actionneurs de force (120, 122, 124, 126) des freins de roue (102, 104, 106, 108) d'un essieu du véhicule sont commandés pour fournir une partie d'un couple de freinage correspondant à la demande de freinage et les actionneurs de force (120, 122, 124, 126) des freins de roue (102, 104, 106, 108) de l'essieu du véhicule sont verrouillés dans une position d'actionnement correspondant au couple de freinage réglé.

5. Procédé selon la revendication 4, **caractérisé en ce que** l'essieu du véhicule est un essieu arrière du véhicule (100).

6. Procédé selon l'une quelconque des revendications précédentes, **caractérisé en ce que** les actionneurs de force (120, 122, 124, 126) comprennent chacun un entraînement par moteur électrique et une boîte de vitesses en aval de l'entraînement, dans lequel le verrouillage d'un actionneur de force (120, 122, 124, 126) est effectué par un blocage mécanique de l'entraînement par moteur électrique ou de la boîte de vitesses.

7. Procédé selon l'une quelconque des revendications précédentes, **caractérisé en ce que** la température des freins de roue (102, 104, 106, 108) et/ou des composants des freins de roue (102, 104, 106, 108) est estimée à partir des paramètres de fonctionnement des freins de roue (102, 104, 106, 108).

8. Procédé selon l'une quelconque des revendications précédentes, **caractérisé en ce que** le frein de roue (102, 104, 106, 108) dont l'actionneur de force (120, 122, 124, 126) verrouillé mécaniquement est le frein de roue (102, 104, 106, 108) du système de freinage ayant la température la plus élevée.

9. Procédé selon l'une quelconque des revendications précédentes, **caractérisé en ce que**, outre la température des freins de roue (102, 104, 106, 108) et/ou des composants des freins de roue (102, 104, 106, 108) et la vitesse, un angle d'inclinaison du véhicule (100) est déterminé, dans lequel l'actionneur de force (120, 122, 124, 126) de l'au moins un frein de roue (102, 104, 106, 108) n'est verrouillé que si l'angle d'inclinaison du véhicule (100) est supérieur à une valeur limite définie.

10. Procédé selon l'une quelconque des revendications précédentes, **caractérisé en ce que** l'au moins un frein de roue (102, 104, 106, 108) possède une fonction de frein de stationnement, dans lequel le verrouillage de l'actionneur de force (120, 122, 124, 126) du frein de roue (102, 104, 106, 108) est effectué par l'activation de la fonction de frein de stationnement.
